# EUROPEAN PATENT APPLICATION

(11) **EP 4 545 160 A1**
(43) Date of publication of application: **30.04.2025**
(21) Application number: 23206069.9
(22) Date of filing: 26.10.2023
(51) Int. Cl.: B01D 3/16

(54) **A VALVE FOR A MASS TRANSFER CONTACT TRAY**

(71) Applicant: Sulzer Management AG, 8401 Winterthur (CH)
(72) Inventor: The designation of the inventor has not yet been filed
(74) Representative: IPS Irsch AG

(57) **Abstract**

The present invention relates to a valve for a mass transfer contact tray comprising a central portion and two leg portions, wherein the central portion is - seen in the cross-section of the valve - non-planar and comprises a front edge, two side edges and a rear edge, wherein a first of the two leg portions is connected at least partially with the front edge of the central portion and extends with a first inclination angle towards the base plane of the central portion downwardly, wherein the other, second leg portion is connected at least partially with the rear edge of the central portion and extends with a second inclination angle towards the base plane of the central portion downwardly, and wherein the first inclination angle is different to the second inclination angle.

## Description

The present invention relates to a valve for a mass transfer contact tray as well as to a mass transfer contact tray comprising a plurality of such valves.

Mass transfer contact trays are usually used in mass transfer columns. Mass transfer columns are for instance employed for an intensive gas-liquid or liquid-liquid contact in a wide variety of processes, such as in particular distillation, extraction, absorption, stripping, scrubbing and the like. During the operation of mass transfer columns usually also a heat transfer between single phases occurs, why mass transfer columns are also denotated as mass and heat transfer columns. Subsequently, these columns are shorty referred to as mass transfer columns. Distillation columns, for example, are designed to separate a specific substance from a liquid mixture comprising two or more substances by selective evaporation and condensation. For this purpose, distillation columns comprise a boiler at the bottom and a condenser at the top so that during the operation gas or vapour, respectively, rises upwardly and liquid descends so as to enable a gas-liquid contact for effecting the mass and heat transfer between both phases. The substance with the higher boiling point will concentrate in the liquid phase, wherein the substance with the lower boiling point will concentrate in the gas phase. In order to achieve an intensive gas-liquid contact, which is essential for achieving a high separation efficiency, such columns are typically filled with an internal to optimize the gas-liquid mass transfer, such as with several mass transfer contact trays.

Mass transfer contact trays are typically arranged throughout the height of the mass transfer column on top of each other in spaced apart relation, wherein each of the mass transfer contact trays typically comprises a tray deck, in which orifices for allowing gas to pass the mass transfer contact tray are disposed, and one or more downcomers for guiding the liquid from the mass transfer contact tray to the next lower mass transfer contact tray. Thus, the mass transfer contact trays are arranged in the mass transfer column so that descending liquid is directed across each mass transfer contact tray and from an upper mass transfer contact tray to an adjacent lower mass transfer contact tray, whereas ascending gas passes through the orifices of the trays so that a mass transfer and/or heat transfer is effected between the liquid and gas. Valves as deflectors are arranged above each orifice in the tray deck, in order to assure an intimate gas-liquid contact between the ascending gas being deflected by the valves and the liquid flowing over the tray deck as well as to prevent that the liquid flows through the orifices through the respective tray deck. More specifically, each of the valves comprises a central portion being arranged vertically above the respective orifice and two leg portions on the opposite sides of the central portion, with which the valve is connected with and fixed on the tray deck. The side areas defined between the central portion and the leg portions of the valve is open so that the gas ascending through the orifices is deflected on the lower surfaces of the central portion as well as of the leg portions and flows through the open side areas in horizontal or at least essentially horizontal flow onto the tray deck, on which the liquid flows over the tray deck. On account of the gas pressure, the liquid is prevented from entering through the open side areas into the void volume below the central portions of the valves and from there through the orifices downwardly, provided that the gas pressure is high enough. During the operation of the mass transfer column, the gas leaving the valves enters into the liquid phase and is dispersed therein as small gas bubbles so that a froth of liquid with entrained gas bubbles forms on the tray deck. This intimate gas-liquid contact increases the separation efficiency of the mass transfer column. When the froth enters the downcomer and descends down the height of the downcomer, at least the majority of the gas being entrained in the froth must be released from the froth so as to separate the froth into gas and liquid, because otherwise the downcomer cannot accommodate the froth or the liquid does not flow downwardly to the adjacent lower tray deck, respectively. This phenomenon is called flooding and restricts the capacity of the mass transfer column to certain gas and liquid flows.

In view of this, the object underlying the present invention is to provide a valve, which allows to increase the contact efficiency between liquid and gas during the operation of a mass transfer column, thus leading to an excellent separation efficiency as well as to an excellent capacity of the mass transfer column, wherein the valve is nevertheless of relatively simple construction and may be easily mounted or fixed, respectively, on a tray deck.

In accordance with the present invention, this object is solved by providing a valve for a mass transfer contact tray comprising a central portion and two leg portions, wherein the central portion is - seen in the cross-section of the valve - non-planar and comprises, seen in the top view, a front edge, two side edges and a rear edge, wherein a first of the two leg portions is connected at least partially with the front edge of the central portion and extends with a first inclination angle towards the base plane of the central portion downwardly, wherein the other, second leg portion is connected at least partially with the rear edge of the central portion and extends with a second inclination angle towards the base plane of the central portion downwardly, and wherein the first inclination angle is different to the second inclination angle.

This solution bases on the finding that by combining a valve with a non-planar central portion with an asymmetric leg design, i.e. by providing two leg portions with different inclination angle, in a simple manner the contact efficiency between liquid and gas during the operation of a mass transfer column comprising tray decks with these valves can be significantly increased so that an excellent separation efficiency as well as excellent capacity is obtained. Without wished to be bound to any theory, it is considered that the non-planar central portion of the valve effects to very efficiently deflect the vertical flow direction of the ascending gas to an at least essentially horizontal flow direction and to direct the ascending gas towards the tray deck for a particular efficient gas-liquid contact and to thereby also reduce the height of the froth, which in turn increases the capacity of the mass transfer column. In addition, the asymmetrical leg portion design leads, seen in the longitudinal direction of the valve, to an efficient forward push of the gas onto the tray deck, thus synergistically leading together with the non-planar central portion of the valve to an excellent separation efficiency as well as excellent capacity of a mass transfer column comprising mass transfer contact trays being provide with such valves. Another advantage of the valve in accordance with the present invention is that the valve is, despite of its excellent operational effects, nevertheless of relatively simple construction and may be easily mounted or fixed, respectively, on a tray deck. More specifically, it may be easily produced by forming it from the tray deck by using a respectively formed stamping tool.

The base plane of the central portion of the valve is in accordance with the present invention the plane, in which the lowest points of the non-planar central portion lie, when the valve is oriented so that, seen in the vertical direction, the central portion is the top and the leg portions extend downwardly.

In accordance with the present invention, the first leg portion of the valve extends with a first inclination angle towards the base plane of the central portion downwardly and the second leg portion extends with a second inclination angle towards the base plane of the central portion downwardly, wherein the first inclination angle is different to the second inclination angle. In case that the respective leg portion is a rectangular, trapezoidal or square plate, the inclination angle is the angle between the base plane of the central portion and the surface of the plate. In case that the respective leg portion is not symmetrical in its cross-section, but for instance non-symmetrically curved, the inclination angle is the angle of the respective leg portion seen in the vertical longitudinal section of the valve, wherein the vertical longitudinal sectional plane is that extending through the valve between the midpoint of the length of the front edge and the midpoint of the length of the rear edge of the central portion of the valve. If the respective leg portion is in the vertical longitudinal section not a straight line, but comprises one or more straight line sub-portions and one or more non-straight line sub-portions, such as curved line sub-portion(s), the inclination angle is the angle of that straight line sub-portion having the highest inclination angle. In case that the respective leg portion does not comprise any straight line sub-portion, the inclination angle is the average angle resulting by, seen in the vertical longitudinal section of the valve, summing all angles of all adjacent points of the respective leg portion and dividing the sum by the number of points.

Concerning the numeric value of the inclination angle, neither the first leg portion nor the second leg portion is particularly limited, as long as both inclination angles are different. Thus, the first inclination angle and/or the second inclination angle may be any numeric value between more than 0 to 90°. Preferably, the first inclination angle is 20 to 70° and more preferably 25 to 45°, whereas it is preferred that the second inclination angle is more than 10 to 60° and more preferably 10 to 30°.

Good results, i.e. a particular efficient forward pushing of the gas onto the tray deck is achieved, when the difference between the first inclination angle and the second inclination angle is -30 to -5° or +5 to +30° and more preferably -20 to -10° or +10 to +20°.

In accordance with a particular preferred embodiment of the present invention, the front edge of the central portion of the valve is longer than the rear edge of the central portion of the valve and/or the first inclination angle is larger than the second inclination angle. Thereby, a particular efficient forward pushing of the gas onto the tray deck is achieved.

In this embodiment, it is preferred that the front edge of the central portion of the valve is 5 to 50%, preferably 10 to 30% and more preferably 15 to 25% longer than the rear edge of the central portion of the valve.

For instance, the front edge of the central portion is 5 to 40 mm long and the rear edge of the central portion is 5 to 35 mm long. More preferably, the front edge of the central portion is 10 to 35 mm long and the rear edge of the central portion is 10 to 30 mm long.

Good results are in particular obtained, when in this embodiment of the present invention the first inclination angle is larger, preferably 5 to 30° larger and more preferably 10 to 20° larger than the second inclination angle.

As set out above, the central portion of the valve is, seen in the cross-section of the valve, non-planar. In principle, the present invention is not particularly limited concerning the kind of non-planarity. However, good results are in particular obtained, when the central portion of the valve is, seen in the cross-section of the valve, oval, elliptic or otherwise curved. Particularly preferably, the central portion of the valve is, seen in the cross-section of the valve, circularly curved. Circularly curved means a portion of a circle extending in a certain angle of more than 0° to less than 360° of the hypothetical circle, which is achieved when the portion of the circle is completed to a circle.

In a further development of the idea of the present invention, it is suggested that the central portion of the valve is, seen in the cross-section of the valve, circularly curved and has a curvature radius of 5 to 80 mm and preferably of 10 to 50 mm.

Moreover, it is preferred that the central portion of the valve is, seen in the cross-section of the valve, a portion of a circle extending over more than 0 to 120°, preferably 10 to 90° and more preferably 30 to 60° of the hypothetical circle, which is achieved when the portion of the circle is completed to a circle.

Concerning the shape of the valve and of the central portion of the valve seen in the top view of the valve, the present invention is not particularly restricted. For instance, the valve as well as the central portion may have, seen in the top view, a square, a rectangular, a trapezoidal or a polygonal form.

In accordance with a preferred embodiment of the present invention, the central portion of the valve is, seen in the top view, trapezoidal, i.e. it comprises a front edge, a rear edge and two side edges, wherein the two side edges are inclined in the horizontal plane towards the longitudinal direction of the valve so that the central portion of the valve, seen in the top view, tapers from the front edge to the rear edge or vice versa. Preferably, the front edge is longer than the rear edge of the central portion and the two side edges of the central portion are straight lines, each of which connecting one end of the front edge with the corresponding end of the rear edge. Both side edges are preferably straight lines.

Similar thereto, if the central portion of the valve is, seen in the top view, a square or a rectangle, the central portion comprises a front edge, a rear edge and two side edges, wherein the two side edges are preferably straight lines.

In accordance with an alternative, particular preferred embodiment of the present invention, the central portion comprises, seen in the top view, two side edges, each of which connecting one end of the front edge with one end of the rear edge, wherein each of both side edges comprises, seen in the direction from the front edge to the rear edge, one or more straight line sub-portions and one or more non-straight line sub-portions. Thereby, both side edges of the central portion comprise, seen in the top view, one or more deviations from straight lines and thus at least one extension and/or at least one depression from a straight line. Thereby, gas flowing through the orifice into the inner void volume of the valve and from there through the sides of the valve outside the valve are subjected to shear forces, which synergistically leads together with the asymmetric length portions design and the non-planar central portion to a particular high contributing capacity.

While the side edges of the central portion of the valve are in the straight line sub-portion(s) straight lines, the non-straight line sub-portions of the side edges of the central portion of the valve may have in the aforementioned embodiment any non-straight form, such as a polygonal form, a meander-like form, such as a zig-zag-form, an oval form, an elliptic form or an otherwise curved form. Good results are in particular obtained, when each of the side edges of the central portion of the valve has in the non-straight line sub-portion a circular curvature, so that the central portion comprises in its side edges, seen in the top view of the central portion, one or more ripples. For instance, each of the side edges of the central portion of the valve has in the non-straight line sub-portion a circular curvature with a curvature radius of 1 to 10 mm and preferably of 1 to 5 mm. Preferably, each of the side edges of the central portion of the valve has in the non-straight line sub-portion the form of a portion of a circle extending in a certain angle of more than 0° to less than 360°, preferably 10 to 120° and more preferably 50 to 90° of the hypothetical circle, which is achieved when the portion of the circle is completed to a circle. Good results are in particular obtained, when the side edges of the central portion of the valve each comprises one to three, more preferably one or two and most preferably one non-straight line sub-portion and the same number or the same number minus one of straight line sub-portions. For example, the central portion of the valve comprises, seen from the front edge to the rear edge of the central portion, a non-straight line sub-portion followed by a straight line sub-portion or it comprises, in this order, a non-straight line sub-portion followed by a straight line sub-portion followed by a non-straight line sub-portion followed by a straight line sub-portion.

In a particular preferred variant of this embodiment the central portion comprises, seen in the top view from the front edge to the rear edge of the central portion, an extended sub-portion having a width being larger than the length of the front edge of the central portion and a trapezoidal sub-portion, wherein one end of the extended sub-portion forms the front edge of the central portion and the opposite end of the extended sub-portion is connected with one end of the trapezoidal sub-portion, and, wherein the end of the trapezoidal sub-portion being opposite to that being connected with the extended sub-portion forms the rear edge of the central portion. Extended sub-portion having a width being larger than the length of the front edge of the central portion means that any width of the extended sub-portion is larger than the length of the front edge, i.e. each line lying within the extended sub-portion and being parallel to the front edge is larger than the front edge. In this embodiment, the extended sub-portion comprises the non-straight line sub-portions of the side edges of the central portion, whereas the trapezoidal sub-portion comprises the straight line sub-portions of the side edges of the central portion of the valve.

Good results are in particular obtained, when, seen in the top view of the valve from the front edge to the rear edge of the central portion, the extended sub-portion first extends up to a maximal width, whereafter it shortens at its end being connected with the trapezoidal sub-portion to the length of the front edge. Preferably, the extended sub-portion has, seen in the top view of the valve, two curved and preferably circularly curved side edges. Moreover, it is preferred that the maximal width of the extended sub-portion is 1 to 50%, preferably 2 to 30% and more preferably 5 to 20% larger than the front edge of the central portion. For instance, the circularly curved side edges of the extended sub-portion each have a curvature radius of 1 to 10 mm and preferably of 1 to 5 mm. Preferably, the circularly curved side edges of the extended sub-portion have the form of a portion of a circle extending in a certain angle of more than 0° to less than 360°, preferably 10 to 120° and more preferably 50 to 90° of the hypothetical circle, which is achieved when the portion of the circle is completed to a circle.

In a further development of the idea of the present invention, it is proposed that the trapezoidal sub-portion of this embodiment has two side edges, each of which being, seen in the top view, a straight line and connecting one end of the extended sub-portion with the rear edge of the central portion.

For example, the central portion of the valve may have two side edges having a total length of each 5 to 80 mm, preferably of 5 to 50 mm and more preferably of 10 to 35 mm, wherein each side edge may comprise, seen from the front edge to the rear edge, one non-straight sub-portion and one straight sub-portion, wherein the non-straight sub-portion has a length of 5 to 50% and preferably of 10 to 30% of the total length of the side edge, with the remainder to 100% being the length of the non-straight sub-portion.

In accordance with the present invention, the first leg portion is at least partially connected with the front edge of the central portion and the second leg portion is at least partially connected with the rear edge of the central portion of the valve. Preferably, the end of the first leg portion being least partially connected with the front edge of the central portion extends over at 50 to 150%, more preferably over 80 to 120%, still more preferably over 90 to 110%, yet more preferably over 95 to 105% and most preferably over exactly the length of the front edge. Likewise thereto, the end of the second leg portion being least partially connected with the rear edge of the central portion extends over at 50 to 150%, more preferably over 80 to 120%, still more preferably over 90 to 110%, yet more preferably over 95 to 105% and most preferably over exactly the length of the rear edge.

The present invention is not particularly limited concerning the geometry and dimensions of the first leg portion of the valve. For instance, the first leg portion is, seen in the vertical longitudinal-section of the valve, straight. Furthermore, the first leg portion may be, seen in the cross-section of the first leg portion, planar or non-planar. For example, the first leg portion may be, seen in the cross-section of the first leg portion, straight, oval, elliptic or curved and is more preferably circularly curved. If the first leg portion is, seen in the cross-section of the first leg portion, straight, it may have the form of a rectangular, square or trapezoidal plate. Preferably, the first leg portion is, seen in the cross-section of the first leg portion, non-planar, more preferably curved and still more preferably circularly curved having a curvature radius of 10 to 250 mm and more preferably of 20 to 220 mm. Furthermore, it is preferred that the first leg portion is, seen in the cross-section of the first leg portion, a portion of a circle extending over more than 0 to 120°, preferably 5 to 90° and more preferably 10 to 60° of the hypothetical circle, which is achieved when the portion of the circle is completed to a circle.

In accordance with a particular preferred embodiment of the present invention, the first leg portion of the valve comprises, seen in the vertical longitudinal-section of the valve, a straight sub-portion and a curved sub-portion, wherein one end of the curved sub-portion is an edge corresponding to and being connected with the front edge of the central portion and the opposite end of the curved sub-portion is connected with one end of the straight sub-portion. While a straight sub-portion is, seen in the vertical longitudinal-section of the valve, straight, a curved sub-portion is, seen in the vertical longitudinal-section of the valve, curved and preferably circularly curved. Moreover, it is preferred that the straight sub-portion and the curved sub-portion of the first leg portion of the valve is, seen in the cross-section of the first leg portion, straight, oval, elliptic or curved. More preferably, the straight sub-portion and the curved sub-portion are, seen in the cross-section of the first leg portion, circularly curved having a curvature radius of 10 to 250 mm and more preferably of 20 to 220 mm. Furthermore, it is preferred that the first leg portion is, seen in the cross-section of the first leg portion, a portion of a circle extending over more than 0 to 120°, preferably 5 to 90° and more preferably 10 to 60° of the hypothetical circle, which is achieved when the portion of the circle is completed to a circle. The curved sub-portion has the function of transition of the inclination of the first leg portion to the horizontally arranged central portion.

In a further development of the idea of the present invention, the first leg portion has a length of 5 to 50 mm and more preferably of 10 to 40 mm. Or, the first leg portion is longer than the central portion, wherein preferably the first leg portion has a length of 90 to 150% and more preferably of 100 to 135% of the length of the central portion. Length means in this connection the dimension of the first leg portion and of the central portion seen in the longitudinal direction of the valve. If the first leg portion comprises a straight sub-portion and a curved sub-portion, it is preferred that the length of the straight sub-portion is 70 to 99% and more preferably 75 to 95% of the total length of the first leg portion, with the remainder to 100% being the length of the curved sub-portion.

Likewise to the first leg portion, also the second leg portion may be, seen in the vertical longitudinal-section of the valve, straight and, seen in the cross-section of the second leg portion, straight, oval, elliptic or curved and preferably circularly curved. Preferably, the second leg portion has, seen in the cross-section of the second leg portion, a curvature radius of 1 to 200 mm and more preferably of 10 to 110 mm. Furthermore, it is preferred that the second leg portion is a portion of a circle extending over more than 0 to 120°, preferably 5 to 90° and more preferably 10 to 70° of the hypothetical circle, which is achieved when the portion of the circle is completed to a circle.

In accordance with a further preferred embodiment of the present invention, it is proposed that the second leg portion comprises, seen in the vertical longitudinal-section of the valve, a straight sub-portion and a curved sub-portion, wherein one end of the curved sub-portion is an edge corresponding to and being connected with the rear edge of the central portion and the opposite end of the curved sub-portion is connected with one end of the straight sub-portion. Again, while a straight sub-portion is, seen in the vertical longitudinal-section of the valve, straight, a curved sub-portion is, seen in the vertical longitudinal-section of the valve, curved and preferably circularly curved. Moreover, it is preferred that the straight sub-portion and the curved sub-portion of the second leg portion of the valve are, seen in the cross-section of the second leg portion, straight, oval, elliptic or curved. More preferably, the straight sub-portion and the curved sub-portions are, seen in the cross-section of the second leg portion, circularly curved having a curvature radius of 1 to 200 mm and more preferably of 10 to 110 mm. Furthermore, it is preferred that the second leg portion is, seen in the cross-section of the second leg portion, a portion of a circle extending over more than 0 to 120°, preferably 5 to 90° and more preferably 10 to 70° of the hypothetical circle, which is achieved when the portion of the circle is completed to a circle. Again, the curved sub-portion has the function of transition of the inclination of the second leg portion to the horizontally arranged central portion.

Good results are in particular obtained, when the second leg portion has a length of 5 to 70 mm and more preferably of 10 to 50 mm. Or, the second leg portion is longer than the central portion, wherein preferably the second leg portion has a length of 110 to 180% and more preferably of 130 to 180% of the length of the central portion. Length means in this connection the dimension of the second leg portion and of the central portion seen in the longitudinal direction of the valve. If the second leg portion comprises a straight sub-portion and a curved sub-portion, it is preferred that the length of the straight sub-portion is 30 to 60% and more preferably 35 to 55% of the total length of the second leg portion, with the remainder to 100% being the length of the curved sub-portion.

Concerning the geometry in the top view, it is preferred that the first leg portion is, seen in the top view, trapezoidal, wherein the edge of the first leg portion being connected with the front edge of the central portion of the valve is shorter than the opposite edge of the first leg portion. The terminal edge of the first leg portion being opposite to the edge of the first leg portion being connected with the front edge of the central portion of the valve, may be straight, as in the case of an ideal trapeze, or may be slightly curved, for instance with a curvature radius of 100 to 220 mm, which is still considered according to the present invention as trapeze.

Likewise thereto, also the second leg portion may be, seen in the top view, trapezoidal, wherein the edge of the second leg portion being connected with the rear edge of the central portion of the valve is longer than the opposite edge of the second leg portion. The terminal edge of the second leg portion being opposite to the edge of the second leg portion being connected with the rear edge of the central portion of the valve, may be straight, as in the case of an ideal trapeze, or may be slightly curved, for instance with a curvature radius of 40 to 110 mm.

In accordance with an alternative, particular preferred embodiment of the present invention, the second leg portion comprises, seen in the top view, two side edges, each of which connecting one end of the rear edge of the central portion with the terminal end of the second leg portion being opposite to the end being connected with the rear edge, wherein each of both side edges comprises, seen in the direction from the rear edge of the central portion to the opposite terminal end of the second leg portion, one or more straight line sub-portions and one or more non-straight line sub-portions. Thereby, both side edges of the second leg portion comprises, seen in the top view, one or more deviations from straight lines and thus at least one extension and/or at least one depression from a straight line. Thereby, gas flowing through the orifice into the inner void volume of the valve and from there through the sides of the valve outside the valve are subjected to shear forces, which synergistically together with the asymmetric leg portions design and with the non-planar central portion contributes to a particular high capacity of a mass transfer column comprising at least one gas-liquid tray with such valves.

While the side edges of the second leg portion of the valve are in the straight line sub-portion(s) straight lines, the non-straight line sub-portions of the side edges of the second leg portion of the valve may have any form, such as a polygonal form, a meander-like form, such as a zig-zag-form, an oval form, an elliptic form or a curved form. Good results are in particular obtained, when each of the side edges of the second leg portion of the valve has in the non-straight line sub-portion a circular curvature, so that the second leg portion comprises in its side edges, seen in the top view of the second leg portion, one or more ripples. For instance, each of the side edges of the second leg portion of the valve has in the non-straight line sub-portion a circular curvature with a curvature radius of 1 to 10 mm and preferably of 1 to 5 mm. Preferably, each of the side edges of the second leg portion of the valve has in the non-straight line sub-portion the form of a portion of a circle extending in a certain angle of more than 0° to less than 120°, preferably 10 to 110° and more preferably 30 to 90° of the hypothetical circle, which is achieved when the portion of the circle is completed to a circle. Good results are in particular obtained, when the side edges of the second leg portion of the valve each comprises one to five, more preferably two or four and most preferably three non-straight line sub-portions and the same number or the same number minus one of straight line sub-portions. For example, the second leg portion comprises, seen from the rear edge of the central portion to the opposite terminal end of the second leg portion, a non-straight line sub-portion followed by a straight line sub-portion followed by a non-straight line sub-portion followed by a straight line sub-portion followed by a non-straight line sub-portion.

In accordance with a particularly preferred embodiment of the present invention, the second leg portion of the valve comprises, seen in the top view from the rear edge of the central portion to the edge of the second leg being opposite thereto, one or more trapezoidal sub-portions and one or more extended sub-portions. Seen in the top view, each of the trapezoidal sub-portions tapers from its end being closer to the rear edge of the central portions to its opposite end. In turn, each of the extended sub-portions has a width being larger than the width of its adjacent sub-portion being closer to the rear edge of the central portion or, if it is connected with the rear edge, has a width being larger than the length of the rear edge of the central portion, wherein all extended and trapezoidal sub-portions are arranged in alternating order. As above, extended sub-portion having a width being larger than the length of the rear edge of the central portion means that any width of the extended sub-portion is larger than the length of the rear edge, i.e. each line lying within the extended sub-portion and being parallel to the rear edge if larger than the front edge.

Good results are in particular obtained, when, seen in the top view of the valve from the rear edge of the central portion to the edge of the second leg being opposite thereto, each of the extended sub-portions of the second leg portion first extends up to a maximal width, whereafter it shortens at its opposite end. In the case of an adjacent trapezoidal sub-portion, the extended sub-portion first extends up to a maximal width, whereafter it shortens at its opposite end to the length of the adjacent trapezoidal sub-portion. Preferably, the extended sub-portion has, seen in the top view, two curved and preferably circularly curved side edges, one of each of the two sides of the extended sub-portion. Moreover, it is preferred that the maximal width of the extended sub-portion is 1 to 50%, preferably 2 to 40% and more preferably 5 to 30% larger than the length of the edge of its adjacent sub-portion being closer to the rear edge of the central portion or, if it is connected with the rear edge, than the length of the rear edge. For instance, the circularly curved side edges of the extended sub-portion each have a curvature radius of 1 to 10 mm and preferably of 1 to 5 mm. Preferably, the circularly curved side edges of the extended sub-portion extends over more than 0 to 120°, preferably 10 to 110° and more preferably 30 to 90° of the hypothetical circle, which is achieved when the circular ring segment is completed to a circle.

Preferably, each trapezoidal sub-portion of the second leg portion of this embodiment has two side edges, each of which being a straight line and, if it is not the terminal sub-portion, connecting one end of an adjacent sub-portion with the corresponding end of an opposite adjacent sub-portion.

In accordance with a particularly preferred embodiment of the present invention, the second leg portion comprises, seen in the top view from the rear edge of the central portion to the edge of the second leg being opposite thereto, three extended sub-portions and two trapezoidal sub-portions, wherein each trapezoidal sub-portion is arranged between two adjacent extended sub-portions.

In accordance with the present invention, it is particularly preferred that, seen in the vertical longitudinal-section of the valve, on each side of the valve the area between a side edge of the central portion, a side edge of the first leg portion and a side edge of the second leg portion is open. Open means with this regard that the area is not covered by any means so that gas may pass from the inner void volume of the valve through the open areas of the sides of the valve outside the valve. The open area on each side is preferably 50 to 100% and more preferably 50% of the total area of the side area of the valve, with the side area of the valve meaning the total area of a side of the valve being surrounded by the outer surface of the valve. For instance, the open area on each side may be 100 to 800 mm2 and more preferably 120 to 600 mm².

Preferably, the valve has a height of 5 to 30 mm and more preferably of 5 to 20 mm, whereas height means in this connection the perpendicular distance from a plane on which the uppermost point of the central portion of the valve lies to the plane on which the lowermost point of the valve lies, when the valve is oriented so that, seen in the vertical direction, the central portion is the top and the leg portions extend downwardly.

In addition, it is preferred that the valve has a lift height of 3 to 28 mm and more preferably of 3 to 18 mm, whereas lift height means in this connection the perpendicular distance from a plane on which the uppermost point of the lower side of the central portion of the valve lies to the plane on which the lowermost point of the valve lies, when the valve is oriented so that, seen in the vertical direction, the central portion is the top and the leg portions extend downwardly.

Furthermore, it is preferred that the valve has a length of 30 to 150 mm and more preferably of 40 to 110 mm, whereas length means in this connection the horizontal distance between the outermost terminal point of the first leg portion and the outermost terminal point of the second leg portion, wherein terminal point means the outermost points of the valve seen in the longitudinal direction of the valve.

In addition, it is preferred that the valve has a broad width of 10 to 60 mm and more preferably of 15 to 45 mm, whereas broad width means the width of the broader of the two terminal ends of the valve.

Also, it is preferred that the valve has a narrow width of 3 to 45 mm and more preferably of 5 to 30 mm, whereas narrow width means the width of the less broader of the two terminal ends of the valve.

In a further aspect, the present invention relates to a mass transfer contact tray comprising at least one tray deck for receiving a flow of liquid thereon, wherein the at least one tray deck has a plurality of orifices for passage of an ascending gas therethrough and comprises a plurality of the above-described valves, wherein each valve is mounted over an orifice with its central portion being disposed in spaced relation to the tray deck and over the orifice, and wherein each of the first and second leg portions extends laterally downwardly from the central portion towards the tray deck.

Preferably, each valve is integrally connected with each of its leg portions with the tray deck. In other words, each valve is a fixed valve, which cannot lift, when gas ascends through the orifices. Such an integral connection may be easily achieved, when the valve is manufactured by forming it from the tray deck by using a respectively formed stamping tool.

In accordance with an alternative embodiment of the present invention, at least one and preferably each valve comprises a fixing means for fixing the valve on the tray deck. Good results are in particular obtained, when the fixing means is a deformable tab.

For instance, at least one and preferably each valve comprises as fixing means two deformable tabs, both of which being connected with opposite terminal ends of the valve, wherein the tray deck comprises a plurality of slots, and, wherein each of the deformable tabs extends from a terminal end of a valve through a slot into the tray deck to abut an underside of said tray deck.

In a further aspect, the present invention relates to a mass transfer column comprising at least one above-described mass transfer contact tray.

Preferably, the mass transfer column comprises at least two, more preferably 2 to 300 and most preferably 2 to 250 of the above-described mass transfer contact trays, which are preferably arranged throughout the height of the mass transfer column on top of each other in spaced apart relation.

Moreover, it is preferred that each mass transfer contact tray comprises a downcomer, wherein preferably any downcomer of a mass transfer contact tray except the lowermost mass transfer contact tray is connected with a lower mass transfer contact tray for guiding the liquid from the mass transfer contact tray to the next lower mass transfer contact tray. The downcomer of the lowermost mass transfer contact tray of the mass transfer column extends downwardly the mass transfer column for guiding the liquid from the mass transfer contact tray downwardly.

Specific embodiments in accordance with the present invention are subsequently described with reference to the appended drawings and by examples.

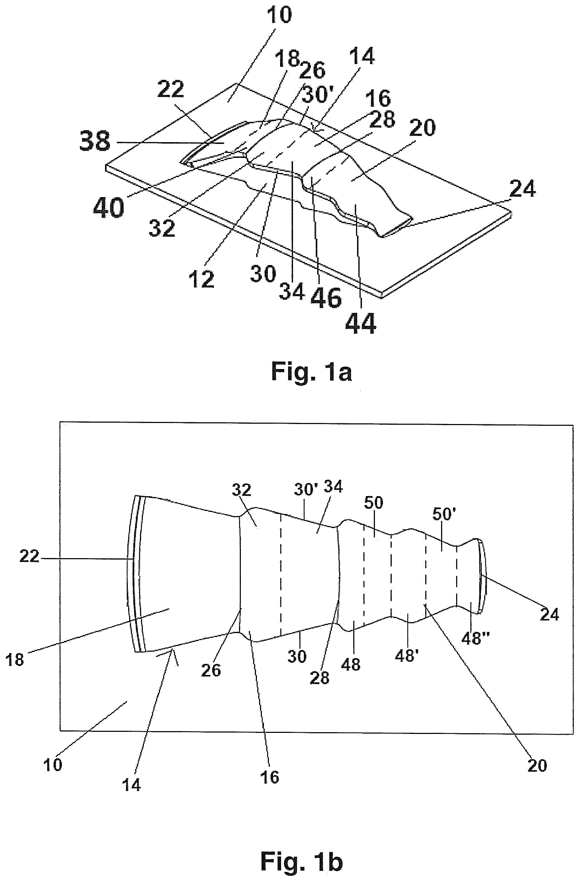

- Fig. 1a: is a schematic perspective view of a portion of a tray deck of a mass transfer contact tray of a mass transfer column comprising a valve in accordance with one embodiment of the present invention.
- Fig. 1b: is a top view of the portion of the tray deck shown in figure 1a.

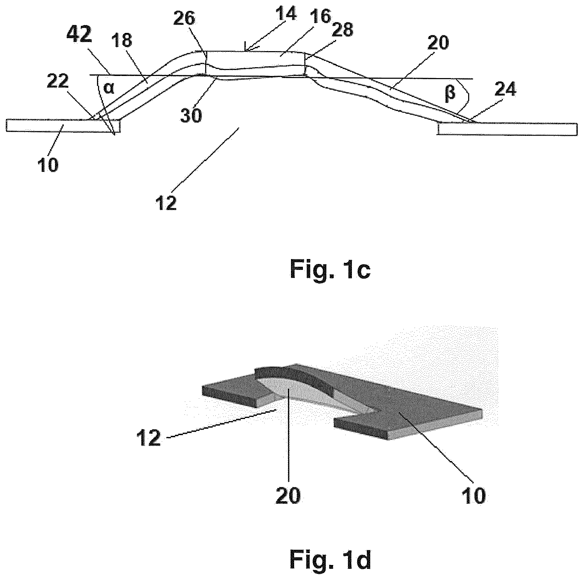

- Fig. 1c: is a side view of the portion of the tray deck shown in figure 1a.
- Fig. 1d: is a cross-sectional view of the tray deck shown in figure 1a.

The tray deck 10 of the mass transfer contact tray of a mass transfer column, a portion of which shown in figures 1a to 1d, comprises an orifice 12 and a valve 14, wherein the valve 14 is mounted over the orifice 12. More specifically, the valve 14 comprises a central portion 16, a first leg portion 18 and a second leg portion 20, wherein the central portion 16 is disposed in spaced relation to the tray deck 10 and over the orifice 12, wherein each of the first leg portion 18 and the second leg portion 20 extends laterally downwardly from the central portion 16 towards the tray deck 10, with which they are integrally connected via their terminal ends 22, 24. As it is in particular shown in figure 1d, the first leg portion 18, the central portion 16 and the second leg portion 20 of the valve 14 are, seen in the cross-section of the valve 14, non-planar, namely they are curved with a curvature radius in the range of 20 to 220 mm in the first leg, 10 to 50 mm for the central portion and 1 to 110 mm for the second leg and have the form of a portion of a circle extending in an angle in the range of 10 to 60° of the hypothetical circle of the first leg, in the range of 30 to 60° for the central portion and in the range of 10 to 70° for the second leg, which is achieved when the portion of the circle is completed to a circle. Furthermore, the central portion 16 of the valve 14 comprises a front edge 26, a rear edge 28 and two side edges 30, 30'. More specifically, as shown in figures 1a and 1b by means of the broken line provided in the central portion 16, which is only for illustrative purposes, the central portion 16 of the valve 14 comprises, seen in the top view from the front edge 26 to the rear edge 28, an extended sub-portion 32 having a width being larger than the length of the front edge 26 of the central portion 16 and a trapezoidal sub-portion 34. One end of the extended sub-portion 32 forms the front edge 26 of the central portion 16 and the opposite end of the extended sub-portion is connected with one end of the trapezoidal sub-portion 34, wherein the end of the trapezoidal sub-portion 34 being opposite to that being connected with the extended sub-portion 32 forms the rear edge 28 of the central portion 16 of the valve 14. The extended sub-portion 32 has, seen in the top view, two circularly curved side edges and thereby the extended sub-portion 32, seen from the front edge 26 to the rear edge 28, first extends up to a maximal width, whereafter it shortens at its end being connected with the trapezoidal sub-portion 34 to the length of the front edge 26. In turn, the trapezoidal sub-portion 34 has two side edges, each of which being, seen in the top view, a straight line and connecting one end of the extended sub-portion 32 with the rear edge 28 of the central portion 16.

The first leg portion 18 comprises - as shown by the broken line provided in the first leg portion 18 shown in figure 1a, which is only for illustrative purposes -, seen in the vertical longitudinal-section of the valve 14, a straight sub-portion 38 and a curved sub-portion 40. While one end of the curved sub-portion 40 is an edge corresponding to and being connected with the front edge 26 of the central portion 16 of the valve 14, the opposite end of the curved sub-portion 40 is connected with one end of the straight sub-portion 38. Both sub-portions 38, 40 have, seen in the cross-section of the second leg portion 20, the form of a portion of a circle, i.e. are circularly curved. The first inclination angle α between the base plane 42 of the central portion 16 and the sidewall of the straight sub-portion 38 of the first leg portion 18 is about 55°. In this connection, base plane 42 of the central portion 16 of the valve 14 is the plane 42, in which the lowest points of the non-planar central portion 16 lie, when the valve is oriented as shown in figures 1a to 1d so that, seen in the vertical direction, the central portion is the top and the leg portions extend downwardly.

Also the second leg portion 20 comprises - as shown by the broken line provided in the second leg portion 20 shown in figure 1a, which is only for illustrative purposes -, seen in the vertical longitudinal-section of the valve 14, a straight sub-portion 44 and a curved sub-portion 46. While one end of the curved sub-portion 46 is an edge corresponding to and being connected with the rear edge 28 of the central portion 16 of the valve 14, the opposite end of the curved sub-portion 46 is connected with one end of the straight sub-portion 44. Both sub-portions 44, 46 have, as shown in figure 1d, seen in the cross-section of the second leg portion 20, the form of a portion of a circle, i.e. are circularly curved. The second inclination angle β between the base plane 42 of the central portion 16 and the sidewall of the straight sub-portion 46 of the second leg portion 20 is about 70°. As shown in figure 1b by means of the broken lines provided in the second leg portion 20, which are only for illustrative purposes, the second leg portion 20 of the valve 14 comprises, seen in the top view from the rear edge 28 of the central portion 16 to the terminal end 24 of the second leg portion 20, three extended sub-portions 48, 48', 48" and two trapezoidal sub-portion 50, 50', which are arranged in alternative order. Each of the extended sub-portions 48, 48' has, seen in the top view, two circularly curved side edges and thereby each of the extended sub-portions 48, 48', seen in the top view from the rear edge 28 of the central portion 16 to the terminal end 24 of the second leg portion 20, first extends up to a maximal width, whereafter it shortens to the width of the left outermost edge of the adjacent trapezoidal sub-portion 50, 50'. In turn, the extended sub-portion 48" has, seen in the top view, two curved side edges.

### Reference Numeral List

- 10: Tray deck
- 12: Orifice
- 14: Valve
- 16: Central portion of the valve
- 18: First leg portion of the valve
- 20: Second leg portion of the valve
- 22: Terminal end of the first leg portion
- 24: Terminal end of the second leg portion
- 26: Front edge of the central portion
- 28: Rear edge of the central portion
- 30, 30': Side edges of the central portion
- 32: Extended sub-portion of the central portion
- 34: Trapezoidal sub-portion of the central portion
- 38: Straight sub-portion of the first leg portion
- 40: Curved sub-portion of the first leg portion
- 42: Base plane
- 44: Straight sub-portion of the second leg portion
- 46: Curved sub-portion of the second leg portion
- 48, 48', 48": Extended sub-portion of the second leg portion
- 50, 50': Trapezoidal sub-portion of the second leg portion

- α: Inclination angle of the first leg portion
- β: Inclination angle of the second leg portion

## Claims

1. A valve for a mass transfer contact tray comprising a central portion and two leg portions, wherein the central portion is - seen in the cross-section of the valve - non-planar and comprises a front edge, two side edges and a rear edge, wherein a first of the two leg portions is connected at least partially with the front edge of the central portion and extends with a first inclination angle towards the base plane of the central portion downwardly, wherein the other, second leg portion is connected at least partially with the rear edge of the central portion and extends with a second inclination angle towards the base plane of the central portion downwardly, and wherein the first inclination angle is different to the second inclination angle.

2. The valve in accordance with claim 1, wherein the first inclination angle is more than 0 to 90°, preferably 20 to 70° and more preferably 25 to 45°, and/or wherein the second inclination angle is more than 0 to 90°, preferably more than 10 to 60° and more preferably 10 to 30°, and/or wherein the first inclination angle is larger, preferably 5 to 30° and more preferably 10 to 20° larger than the second inclination angle.

3. The valve in accordance with claim 1 or 2, wherein the front edge of the central portion is 5 to 50%, preferably 10 to 30% and more preferably 15 to 25% longer than the rear edge of the central portion of the valve.

4. The valve in accordance with any of the preceding claims, wherein the central portion of the valve is, seen in the cross-section of the valve, circularly curved and has a curvature radius of 5 to 80 mm and preferably of 10 to 50 mm.

5. The valve in accordance with any of the preceding claims, wherein the central portion comprises, seen in the top view, two side edges, each of which connecting one end of the front edge with one end of the rear edge, wherein each of both side edges comprises, seen in the direction from the front edge to the rear edge, one or more straight line sub-portions and one or more non-straight line sub-portions, wherein each of the side edges of the central portion of the valve has in the non-straight line sub-portion a circular curvature, wherein preferably the central portion comprises, seen in the top view from the front edge to the rear edge, an extended sub-portion having a width being larger than the length of the front edge of the central portion and a trapezoidal sub-portion, wherein one end of the extended sub-portion forms the front edge of the central portion and the opposite end of the extended sub-portion is connected with one end of the trapezoidal sub-portion, and, wherein the end of the trapezoidal sub-portion being opposite to that being connected with the extended sub-portion forms the rear edge of the central portion.

6. The valve in accordance with any of the preceding claims, wherein the first leg portion comprises, seen in the vertical longitudinal-section of the valve, a straight sub-portion and a curved sub-portion, wherein one end of the curved sub-portion is an edge corresponding to and being connected with the front edge of the central portion and the opposite end of the curved sub-portion is connected with one end of the straight sub-portion, and, wherein each of the straight sub-portion and the curved sub-portion is, seen in the cross-section of the first leg portion, straight, oval, elliptic or curved and preferably circularly curved.

7. The valve in accordance with any of the preceding claims, wherein the second leg portion comprises, seen in the vertical longitudinal-section of the valve, a straight sub-portion and a curved sub-portion, wherein one end of the curved sub-portion is an edge corresponding to and being connected with the rear edge of the central portion and the opposite end of the curved sub-portion is connected with one end of the straight sub-portion, and, wherein each of the straight sub-portion and the curved sub-portion is, seen in the cross-section of the second leg portion, straight, oval, elliptic or curved and preferably circularly curved.

8. The valve in accordance with any of the preceding claims, wherein the first leg portion is, seen in the top view, trapezoidal, wherein the edge of the first leg portion being connected with the front edge of the central portion of the valve is shorter than the opposite edge of the first leg portion.

9. The valve in accordance with any of the preceding claims, wherein the second leg portion is, seen in the top view, trapezoidal, wherein the edge of the second leg portion being connected with the rear edge of the central portion of the valve is longer than the opposite edge of the second leg portion

10. The valve in accordance with any of the preceding claims, wherein the second leg portion comprises, seen in the top view from the rear edge of the central portion to the edge of the second leg being opposite thereto, one or more trapezoidal sub-portions and one or more extended sub-portions, wherein, seen in the top view, each of the trapezoidal sub-portions tapers from its end being closer to the rear edge of the central portions to its opposite end, wherein each of the extended sub-portions has a width being larger than the width of its adjacent sub-portion being closer to the rear edge of the central portion or, if it is connected with the rear edge, has a width being larger than the length of the rear edge of the central portion, wherein all extended and trapezoidal sub-portions are arranged in alternating order.

11. The valve in accordance with any of the preceding claims, wherein the first leg portion is longer than the central portion, wherein preferably the first leg portion has a length of 90 to 150% and more preferably of 100 to 135% of the length of the central portion.

12. The valve in accordance with any of the preceding claims, wherein the second leg portion is longer than the central portion, wherein preferably the second leg portion has a length of 110 to 180% and more preferably of 130 to 180% of the length of the central portion.

13. A mass transfer contact tray comprising at least one tray deck, wherein the at least one tray deck has a plurality of orifices and comprises a plurality of valves in accordance with any of the preceding claims, wherein each valve is mounted over an orifice with its central portion being disposed in spaced relation to the tray deck and over the orifice, wherein each of the first and second leg portions extends laterally downwardly from the central portion towards the tray deck, and wherein each valve is integrally connected with each of its leg portions with the tray deck.

14. A mass transfer column comprising at least one mass transfer contact tray in accordance with claim 13.

15. The mass transfer column in accordance with claim 14, which comprises 2 to 300 and most preferably 2 to 250 of the above-described mass transfer contact trays, which are preferably arranged throughout the height of the mass transfer column on top of each other in spaced apart relation, wherein each mass transfer contact tray comprises a downcomer, wherein any downcomer of a mass transfer contact tray except the lowermost mass transfer contact tray is connected with a lower mass transfer contact tray.
